(19) Europäisches Patentamt
European Patent Office
Office européen des brevets

(11) EP 4 618 223 A1

(12) # EUROPEAN PATENT APPLICATION
published in accordance with Art. 153(4) EPC

(43) Date of publication:
**17.09.2025 Bulletin 2025/38**

(21) Application number: **23923344.8**

(22) Date of filing: **23.02.2023**

(51) International Patent Classification (IPC):
***H01M 10/0568*** *(2010.01)* ***H01M 10/0569*** *(2010.01)*
***H01M 10/0567*** *(2010.01)*

(52) Cooperative Patent Classification (CPC):
**H01M 10/0567; H01M 10/0568; H01M 10/0569;**
Y02E 60/10

(86) International application number:
**PCT/CN2023/077904**

(87) International publication number:
**WO 2024/174167 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Hong Kong (HK)**

(72) Inventors:
- **LIU, Jiao**
  **Ningde, Fujian 352100 (CN)**
- **ZHANG, Limei**
  **Ningde, Fujian 352100 (CN)**
- **CHEN, Peipei**
  **Ningde, Fujian 352100 (CN)**
- **REN, Jiamo**
  **Ningde, Fujian 352100 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **SECONDARY BATTERY AND ELECTRIC DEVICE COMPRISING SAME**

(57) This application provides a secondary battery, including a positive electrode plate and an electrolyte solution. The positive electrode plate includes a current collector and a positive electrode material layer disposed on at least one side of the current collector. The positive electrode material layer includes a first lithium iron phosphate material and a second lithium iron phosphate material. $D_{v50}$ of the second lithium iron phosphate material is greater than $D_{v50}$ of the first lithium iron phosphate material. The $D_{v50}$ of the first lithium iron phosphate material is 0.05 μm to 6 μm. The electrolyte solution includes a solvent. The solvent includes a first solvent that is at least one selected from compounds represented by Formula I, where $R_1$ and $R_2$ each are independently selected from a $C_1$ to $C_6$ alkyl or a $C_1$ to $C_6$ haloalkyl. The secondary battery of this application exhibits good balanced overall performance.

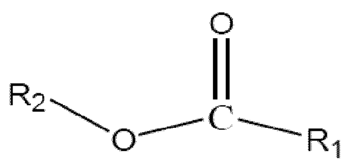
Formula I

EP 4 618 223 A1

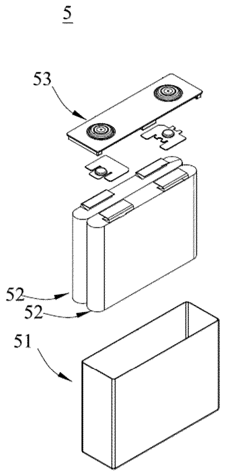


FIG. 2

## Description

### TECHNICAL FIELD

This application relates to the technical field of lithium batteries, and in particular, to a secondary battery and an electrical device containing the secondary battery.

### BACKGROUND

In recent years, lithium-ion secondary batteries have been widely applied in energy storage power systems such as hydro, thermal, wind, and solar power stations, and in many other fields such as electric tools, electric bicycles, electric motorcycles, electric vehicles, military equipment, and aerospace. With the development of the lithium-ion secondary batteries, especially with the extensive use of the lithium-ion secondary batteries in daily life, users expect a battery to be charged faster to meet the needs of fast-paced modern life. Therefore, higher requirements are placed on the fast-charge performance of the lithium-ion secondary batteries.

Lithium-ion secondary batteries of good fast-charge performance are required in this field.

### SUMMARY

This application is made in view of the above subject-matter. An objective of this application is to provide a high-performance fast-charge secondary battery and an electrical device.

To achieve the above objective, this application provides a secondary battery, including a positive electrode plate and an electrolyte solution. The positive electrode plate includes a current collector and a positive electrode material layer disposed on at least one side of the current collector. The positive electrode material layer includes a first lithium iron phosphate material and a second lithium iron phosphate material. $D_{v50}$ of the second lithium iron phosphate material is greater than $D_{v50}$ of the first lithium iron phosphate material. The $D_{v50}$ of the first lithium iron phosphate material is 0.05 $\mu$m to 6 $\mu$m.

The electrolyte solution includes a solvent, and the solvent includes a first solvent that is at least one selected from compounds represented by Formula I:

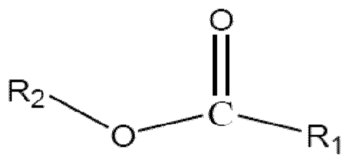

Formula I.

In the formula above, $R_1$ and $R_2$ each are independently selected from a $C_1$ to $C_6$ alkyl or a $C_1$ to $C_6$ haloalkyl.

The secondary battery of this application exhibits improved fast-charge capabilities. At the same time, the secondary battery of this application also exhibits good cycle performance and a relatively low amount of gas generated during storage (that is, a relatively low volume expansion rate, contributing to good safety performance). Therefore, this application provides a fast-charge lithium-ion secondary battery that exhibits good overall performance.

In any embodiment, the $D_{v50}$ of the first lithium iron phosphate material is 0.05 $\mu$m to 4 $\mu$m, optionally 1 $\mu$m to 4 $\mu$m, and further optionally 2 $\mu$m to 4 $\mu$m. The first lithium iron phosphate material with a $D_{v50}$ value falling within the above range is more conducive to improving the fast-charge performance of the battery, reducing the volume expansion rate, and achieving good cycle performance.

In any embodiment, a content $W_1$ of the first lithium iron phosphate material is 2 wt% to 80 wt%, optionally 20 wt% to 60 wt%, and further optionally 20 wt% to 40 wt%, based on a total mass of the first and second lithium iron phosphate materials. The content of the first lithium iron phosphate material in the positive electrode material layer falls within the above range, thereby being more conducive to good balanced overall performance of the secondary battery, that is, improved fast-charge performance and cycle performance, and a reduced volume expansion rate.

In any embodiment, $R_1$ and $R_2$ each are independently selected from a $C_1$ to $C_4$ alkyl or a $C_1$ to $C_4$ haloalkyl, and optionally from methyl, ethyl, propyl, fluoromethyl, fluoroethyl, or fluoropropyl.

In any embodiment, the compound of Formula I is at least one selected from the following compounds:

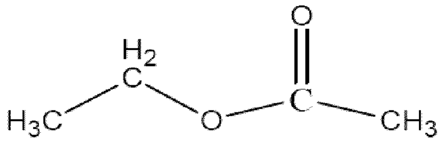
I-1

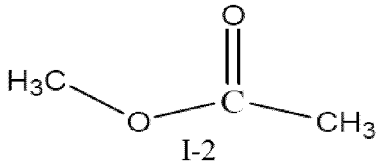
I-2

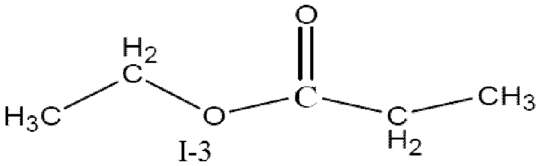
I-3

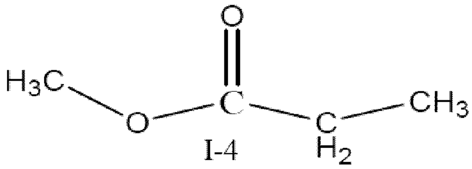
I-4

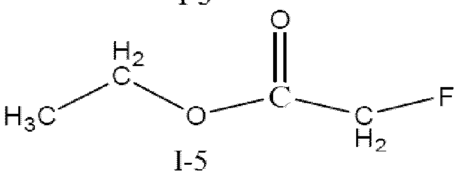
I-5

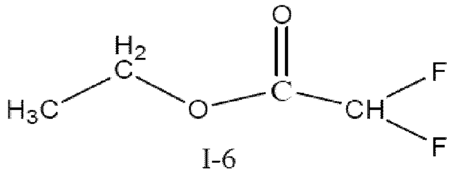
I-6

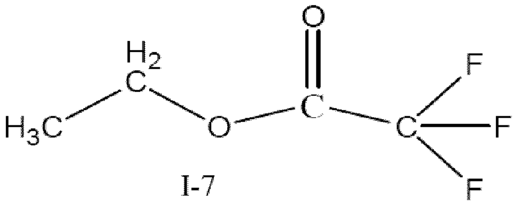
I-7

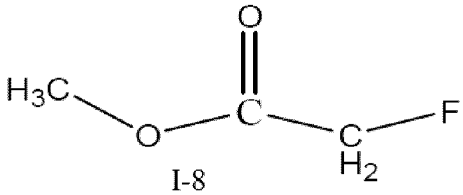
I-8

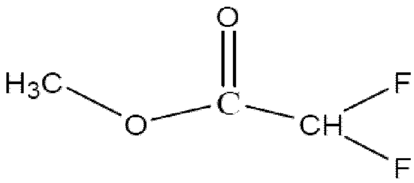
I-9

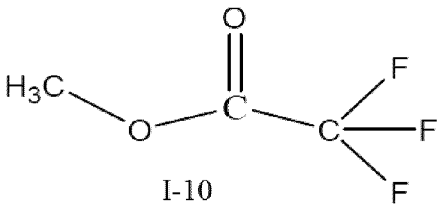
I-10

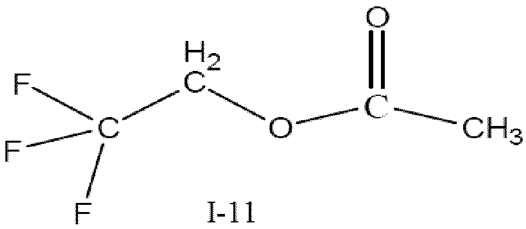
I-11

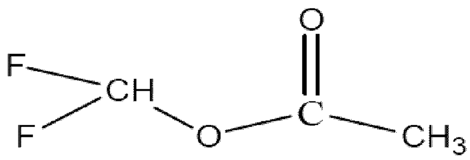
I-12

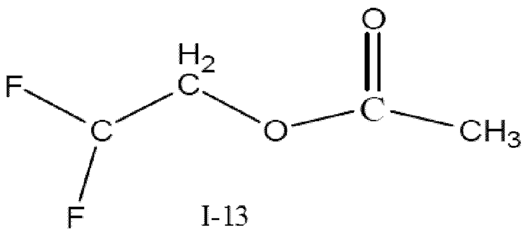
I-13

Optionally, the compound of Formula I is at least one selected from the following compounds:

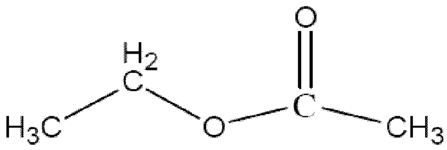

I-1

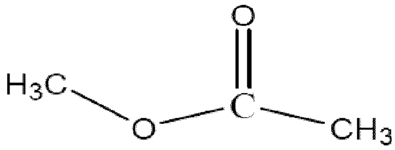

I-2

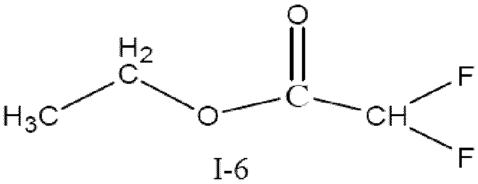

I-6

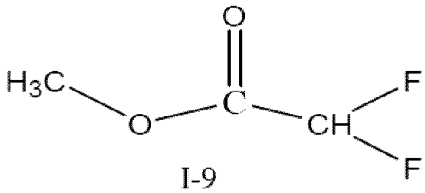

I-9

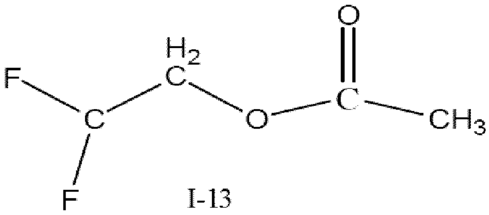

I-13

The first solvent selected improves the viscosity and conductivity of the electrolyte solution, and further improves the fast-charge performance and cycle performance of the secondary battery.

In any embodiment, a content $W_2$ of the first solvent is 20 wt% to 80 wt%, optionally 30 wt% to 70 wt%, and further optionally 50 wt% to 70 wt%, based on a total mass of the solvent. The mass percent of the first solvent is controlled to fall within the above range, so that the secondary battery exhibits good overall performance, for example, desirable fast-charge performance and cycle performance, and a relatively low volume expansion rate.

In any embodiment, the $D_{v50}$ of the first lithium iron phosphate material, a content $W_1$ of the first lithium iron phosphate material, and a content $W_2$ of the first solvent satisfy the following relation: $t = (W_1 \times W_2)/D_{v50}$, and $0.0006 \leq t \leq 12.8$, optionally $0.015 \leq t \leq 0.14$, and further optionally $0.03 \leq t \leq 0.12$.

The $D_{v50}$ is measured in $\mu$m, and both $W_1$ and $W_2$ are mass percent.

When t falls within the above range, the battery cell is ensured to exhibit good fast-charge performance without worsening the amount of gas generated during storage.

In any embodiment, the electrolyte solution further includes an additive. The additive includes a sultone of Formula II and/or a sulfate ester of Formula III:

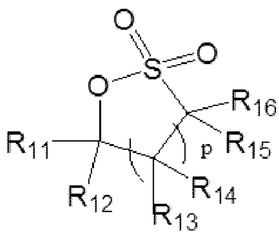

Formula II.

In the formula above, p is 1, 2, or 3, and optionally 1.

$R_{11}$ and $R_{12}$ each are independently selected from a hydrogen atom, a halogen atom, a $C_1$ to $C_6$ alkyl, a $C_1$ to $C_3$ haloalkyl, a $C_1$ to $C_3$ alkoxyl, or a $C_1$ to $C_3$ haloalkoxyl; optionally, $R_{11}$ and $R_{12}$ each are independently selected from a hydrogen atom, a halogen atom, a $C_1$ to $C_3$ alkyl, or a $C_1$ to $C_3$ haloalkyl; and further optionally, $R_{11}$ is a hydrogen atom, and $R_{12}$ is a hydrogen atom, a $C_1$ to $C_3$ alkyl, or a halogen atom.

$R_{13}$ and $R_{14}$ each are independently selected from a hydrogen atom, a halogen atom, a $C_1$ to $C_6$ alkyl, a $C_1$ to $C_6$ haloalkyl, a $C_1$ to $C_6$ alkoxyl, or a $C_1$ to $C_3$ haloalkoxyl; optionally, $R_{13}$ and $R_{14}$ each are independently selected from a hydrogen atom, a halogen atom, a $C_1$ to $C_3$ alkyl, or a $C_1$ to $C_3$ haloalkyl, a $C_1$ to $C_3$ alkoxyl, or $C_1$ to $C_3$ haloalkoxyl; and further optionally, $R_{13}$ and $R_{14}$ each independently are a hydrogen atom or a $C_1$ to $C_3$ alkyl.

$R_{15}$ and $R_{16}$ each are independently selected from a hydrogen atom, a halogen atom, a $C_2$ to $C_6$ alkenyl, an ester group, a $C_1$ to $C_6$ alkyl, a $C_1$ to $C_6$ haloalkyl, a $C_1$ to $C_6$ alkoxyl, or a $C_1$ to $C_6$ haloalkoxyl, and optionally, from a hydrogen

atom, a $C_1$ to $C_3$ alkyl, a $C_1$ to $C_3$ fluoroalkyl, or a $C_2$ to $C_3$ alkenyl; or $R_{15}$ and $R_{16}$ together form a carbonyl.

Alternatively, the sultone of Formula II is

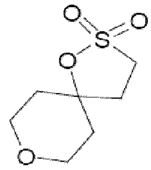
,
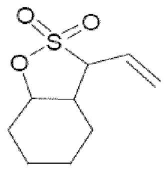
,

or

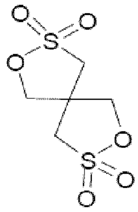
.

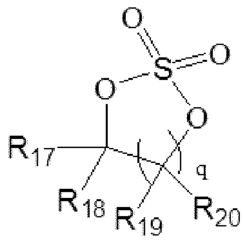
Formula III

In the formula above, q is 1, 2, or 3, and optionally 1.

$R_{17}$ and $R_{18}$ each are independently selected from a hydrogen atom, a halogen atom, a $C_2$ to $C_6$ alkenyl, a $C_1$ to $C_6$ alkyl, a $C_1$ to $C_6$ haloalkyl, a $C_1$ to $C_6$ alkoxyl, a $C_1$ to $C_6$ alkyloxyacyl, a $C_1$ to $C_6$ haloalkyloxyl acyloxyl, a $C_1$ to $C_6$ alkyl, or a 4 to 6-membered cyclic sulfate ester group; optionally, $R_{17}$ and $R_{18}$ each are independently selected from a hydrogen atom, a halogen atom, a $C_2$ to $C_4$ alkenyl, a $C_1$ to $C_4$ alkyl, a $C_1$ to $C_3$ haloalkyl, a $C_1$ to $C_3$ alkoxyl, a $C_1$ to $C_3$ haloalkoxyl acyloxyl, a $C_1$ to $C_3$ alkyl, or a 4 to 6-membered cyclic sulfate ester group; and further optionally, $R_{17}$ and $R_{18}$ each are independently selected from a hydrogen atom, a $C_1$ to $C_4$ alkyl, or a $C_1$ to $C_3$ alkyloxyacyl.

$R_{19}$ and $R_{20}$ each are independently selected from a hydrogen atom, a halogen atom, a $C_1$ to $C_6$ alkyl, a $C_1$ to $C_6$ haloalkyl, a $C_1$ to $C_6$ alkoxyl, a $C_1$ to $C_6$ haloalkoxyl, or an aryl; and optionally, $R_{19}$ and $R_{20}$ each are independently selected from a hydrogen atom, a halogen atom, or a $C_1$ to $C_6$ alkyl.

Alternatively, the sulfonate ester of Formula III is

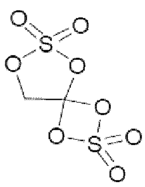
,

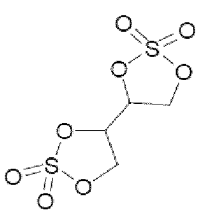
,
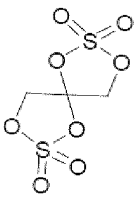
,
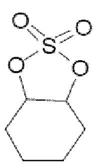
,
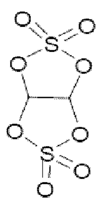
, or
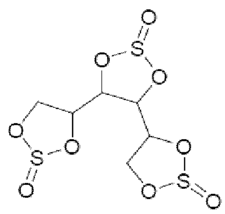
.

The electrolyte solution doped with the above additive further improves the cycle performance of the secondary

battery and reduces the amount of gas generated during storage.

In any embodiment, the additive includes at least one of the following substances:

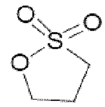
II-1

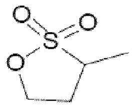
II-2

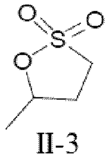
II-3

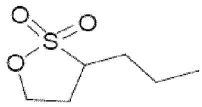
II-4

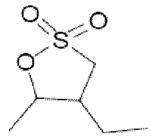
II-5

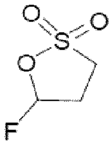
II-6

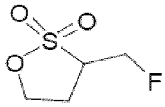
II-7

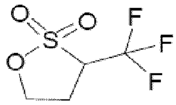
II-8

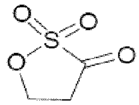
II-9

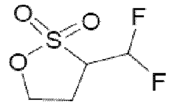
II-10

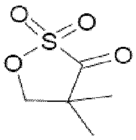
II-11

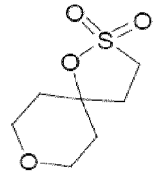
II-12

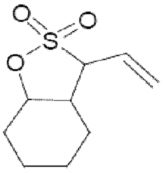
II-13

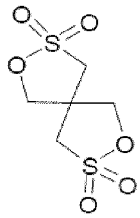
II-14

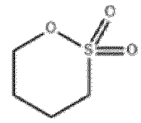
II-15

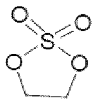
III-1

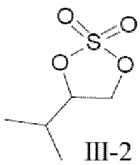
III-2

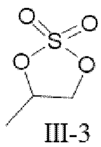
III-3

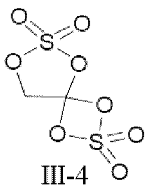
III-4

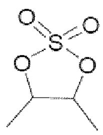
III-5

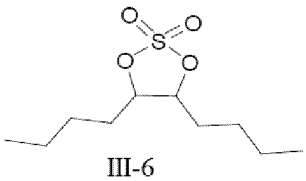
III-6

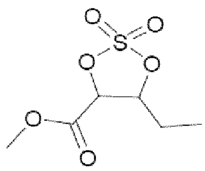
III-7

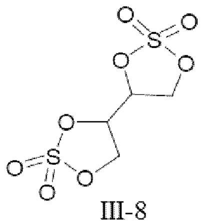
III-8

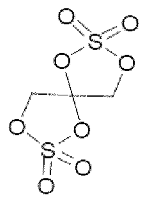
III-9

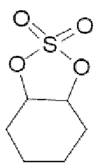
III-10

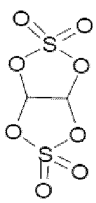
III-11

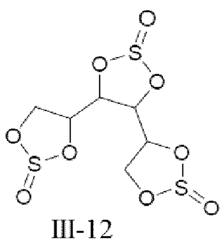
III-12

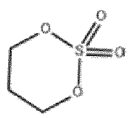
III-13

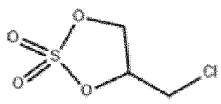
III-14

Optionally, the additive includes at least one of the following substances:

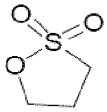
II-1
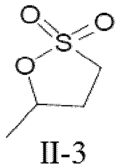
II-3
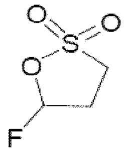
II-6
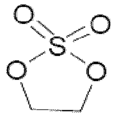
III-1

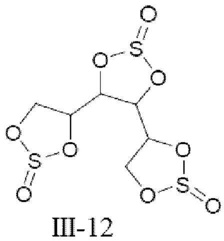
III-12
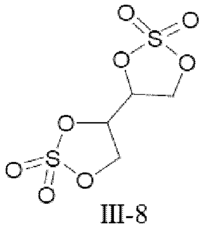
III-8
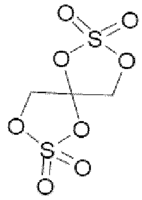
III-9

The above substance selected additionally as an additive further improves the cycle performance of the battery and reduces the amount of gas generated during storage.

In any embodiment, a content $W_3$ of the additive is 0.005 wt% to 10 wt%, optionally 0.01 wt% to 5 wt%, and further optionally 0.05 wt% to 2 wt%, based on a total mass of the electrolyte solution. The additive added at the above mass percent further improves the cycle performance of the secondary battery and reduces the amount of gas generated during storage.

In any embodiment, a content $W_3$ of the additive and a content $W_1$ of the first lithium iron phosphate material satisfy the following relation: $n = W_1/W_3$, and $2 < n < 8000$, optionally $3 \leq n \leq 6000$, further optionally $10 < n < 800$, and still further optionally $15 \leq n \leq 600$. In this way, the secondary battery generates less gas during storage and is superior in fast-charge performance and cycle performance.

In any embodiment, the $D_{v50}$ of the second lithium iron phosphate material is 6 $\mu$m to 20 $\mu$m, and optionally 7 $\mu$m to 12 $\mu$m, thereby further improving the overall performance of the battery.

A second aspect of this application provides an electrical device. The electrical device includes the secondary battery disclosed in the first aspect.

This application provides a lithium-ion secondary battery that exhibits good overall performance. The battery is superior in fast-charge performance as well as cycle performance and safety performance.

## BRIEF DESCRIPTION OF DRAWINGS

FIG. 1 is a schematic diagram of a battery cell according to an embodiment of this application;
FIG. 2 is an exploded view of a battery cell shown in FIG. 1 according to an embodiment of this application;
FIG. 3 is a schematic diagram of a battery module according to an embodiment of this application;
FIG. 4 is a schematic diagram of a battery pack according to an embodiment of this application;
FIG. 5 is an exploded view of a battery pack shown in FIG. 4 according to an embodiment of this application; and
FIG. 6 is a schematic diagram of an electrical device that uses a secondary battery as a power supply according to an embodiment of this application.

List of reference numerals:
1. battery pack; 2. upper box; 3. lower box; 4. battery module; 5. battery cell; 51. housing; 52. electrode assembly; 53. top cap assembly.

## DETAILED DESCRIPTION

The following discloses and describes in detail a secondary battery and an electrical device according to some embodiments of this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter

set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified, the term "or" used herein is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

In recent years, with the advancement of technology of lithium-ion secondary batteries, lithium-ion secondary batteries have been widely applied in energy storage power systems such as hydro, thermal, wind, and solar power stations, and in many other fields such as electric tools, electric bicycles, electric motorcycles, electric vehicles, military equipment, and aerospace. Lithium-ion secondary batteries are used more and more pervasively in daily life, and people hope that batteries can be charged more quickly to meet the requirements in the fast-paced modern society. Therefore, higher requirements are placed on the fast-charge performance of the lithium-ion secondary batteries.

The lithium-ion secondary battery that uses lithium iron phosphate as a positive electrode material exhibits the advantages such as high safety, longevity, and environmental friendliness, and is one of the desirable candidates of power supplies. However, such batteries are unable to meet the fast-charge requirement currently, thereby bottlenecking the application and development of the batteries in industrial and civilian fields.

At the same time, people have also noticed that the sole focus on the improved fast-charge performance produces a nonnegligible adverse effect on the performance metrics such as cycle performance and safety performance of the secondary batteries.

To solve the above problems, this application provides a lithium-ion secondary battery that exhibits good overall performance (that is, good fast-charge performance and other desirable performance metrics).

## Secondary battery

In an embodiment of this application, this application provides a secondary battery. The secondary battery includes a positive electrode plate and an electrolyte solution. The positive electrode plate includes a current collector and a positive electrode material layer disposed on at least one side of the current collector. The positive electrode material layer includes a first lithium iron phosphate material and a second lithium iron phosphate material. $D_{v50}$ of the second lithium iron phosphate material is greater than $D_{v50}$ of the first lithium iron phosphate material. The $D_{v50}$ of the first lithium iron phosphate material is 0.05 $\mu$m to 6 $\mu$m.

The electrolyte solution includes a solvent, and the solvent includes a first solvent that is at least one selected from compounds represented by Formula I:

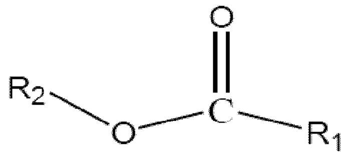
Formula I.

In the formula above, $R_1$ and $R_2$ each are independently selected from a $C_1$ to $C_6$ alkyl or a $C_1$ to $C_6$ haloalkyl.

Without intending to be bound by any theory, this application uses a positive active material layer doped with two types of lithium iron phosphate materials that vary in $D_{v50}$, in combination with an electrolyte solution containing a micromolecular carboxylate ester solvent of Formula I, thereby improving the fast-charge capability of the secondary battery (completing charging within a relatively short charging time). At the same time, the secondary battery of this application also exhibits other desirable performance metrics, such as a relatively small amount of gas generated during storage (that is, a relatively low volume expansion rate, beneficial to improving safety performance) and good cycle performance, especially high-temperature (for example, 60 °C) cycle performance. To sum up, this application provides a lithium-ion secondary battery that exhibits good overall performance. The battery is superior in at least one of fast-charge performance, a reduced amount of gas production, or good cycle performance.

As used herein, the term "$D_{v50}$" is a particle diameter value corresponding to a point at which the cumulative volume percentage of the sample particles reaches 50% in a volume-based particle size distribution curve viewed from a small-diameter side. Generally, the value of $D_{v50}$ may be measured by a method and an instrument known in the art, for example, by a laser diffraction particle size analyzer (such as Malvern Mastersizer 3000).

In some embodiments, the $D_{v50}$ of the first lithium iron phosphate material is 0.05 μm to 4 μm, optionally 1 μm to 4 μm, and further optionally 2 μm to 4 μm. The first lithium iron phosphate material with a $D_{v50}$ value falling within the above range is more conducive to further improving the fast-charge performance of the battery, reducing the volume expansion rate, and achieving good cycle performance.

In some embodiments, a content $W_1$ of the first lithium iron phosphate material is 2 wt% to 80 wt%, optionally 20 wt% to 60 wt%, and further optionally 20 wt% to 40 wt%, based on a total mass of the first and second lithium iron phosphate materials. In some embodiments, the content $W_1$ of the first lithium iron phosphate material is 2 wt%, 10 wt%, 20 wt%, 30 wt%, 40 wt%, 60 wt%, or 80 wt%, or, $W_1$ may fall within a range formed by any two thereof. The content of the first lithium iron phosphate material falls within the above range, thereby being conducive to good balanced overall performance of the secondary battery, that is, improved fast-charge performance and cycle performance, and a reduced volume expansion rate.

**In** this application, "wt%" means a percentage by weight, that is, weight percent or mass percent.

**In** some embodiments, in Formula I, $R_1$ and $R_2$ each are independently selected from a $C_1$ to $C_4$ alkyl or a $C_1$ to $C_4$ haloalkyl, and optionally, $R_1$ and $R_2$ each are independently selected from methyl, ethyl, propyl, fluoromethyl, fluoroethyl, or fluoropropyl. In this application, the number of fluorine atoms in the fluoroalkyl is not particularly limited. In some embodiments, the fluoroalkyl may be a fluoromethyl, a difluoromethyl, a trifluoromethyl, a fluoroethyl, a difluoroethyl, a trifluoroethyl, a tetrafluoroethyl, or a pentafluoroethyl, and further optionally a difluoromethyl or a difluoroethyl. In some embodiments, optionally, $R_1$ is selected from a $C_1$ to $C_4$ alkyl or a $C_1$ to $C_4$ fluoroalkyl, and further optionally a methyl, ethyl, or fluoromethyl. In some embodiments, optionally, $R_2$ is selected from a $C_1$ to $C_4$ alkyl or a $C_1$ to $C_4$ fluoroalkyl, and further optionally a methyl, ethyl, fluoromethyl, or fluoroethyl.

In some embodiments, the compound of Formula I is at least one selected from the following compounds:

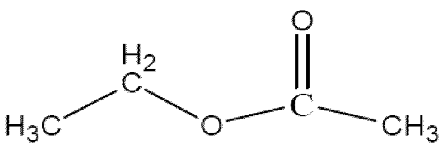
I-1

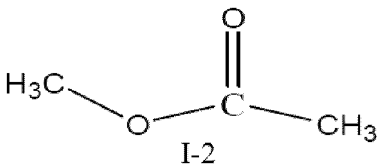
I-2

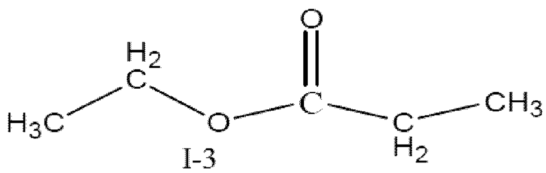
I-3

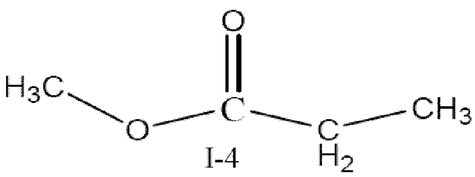
I-4

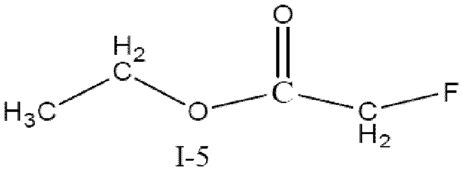
I-5

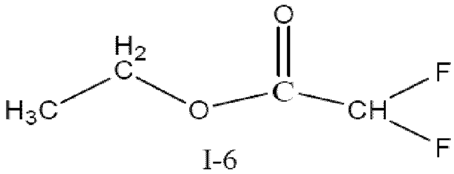
I-6

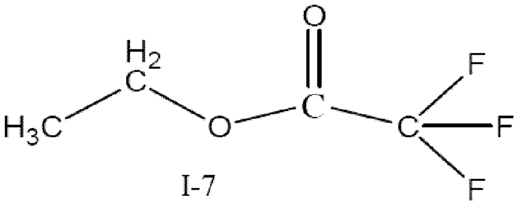
I-7

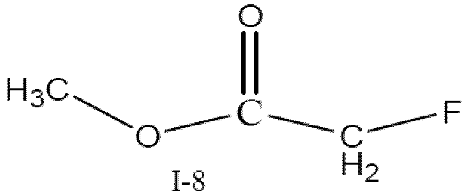
I-8

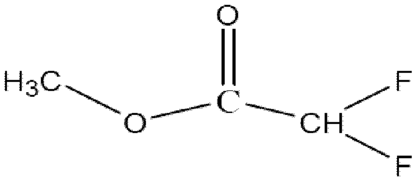
I-9

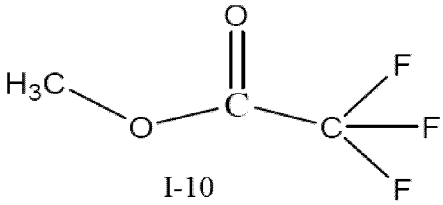
I-10

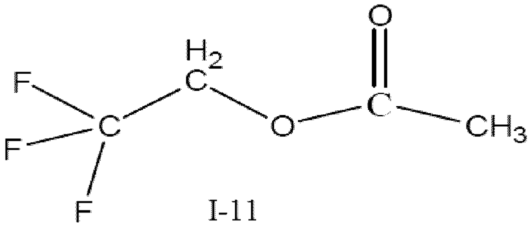
I-11

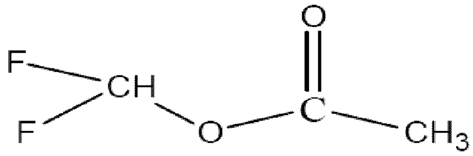
I-12

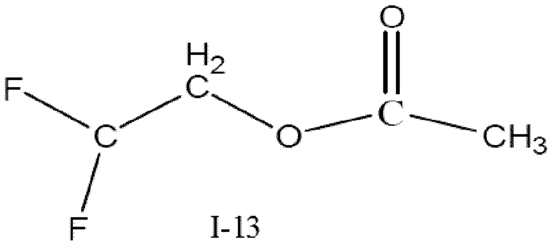
I-13

Optionally, the compound of Formula I is at least one selected from the following compounds:

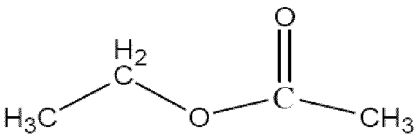
I-1

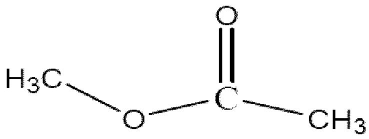
I-2

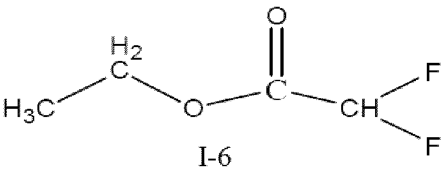
I-6

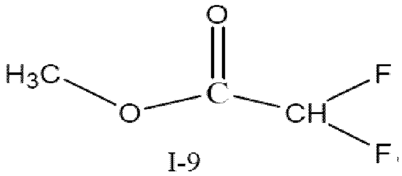
I-9

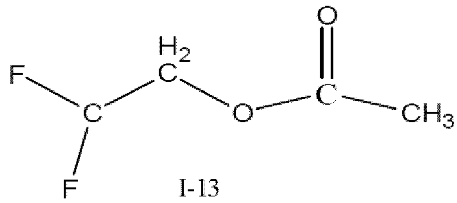

I-13

.

Further optionally, the compound is Formula I-1 and/or Formula 1-2. The additionally selected first solvent endows the electrolyte solution with an appropriate viscosity and a relatively high conductivity, and further improves the fast-charge performance and cycle performance of the secondary battery.

In some embodiments, the content $W_2$ of the first solvent is 20 wt% to 80 wt%, optionally 30 wt% to 70 wt%, and further optionally 50 wt% to 70 wt%, based on a total mass of the solvent. In some embodiments, the content $W_2$ of the first solvent may be 20 wt%, 30 wt%, 40 wt%, 50 wt%, 60 wt%, 70 wt%, or 80 wt%, or, $W_2$ may fall within a range formed by any two thereof. The content $W_2$ of the first solvent is controlled to fall within the above range, thereby being more conducive to good overall performance of the secondary battery, that is, at least one of desirable fast-charge performance (completing charging within a relatively short charging time), good cycle performance, or a relatively low volume expansion rate.

In some embodiments, optionally, the solvent further includes other solvents. The other solvents are selected from a chain carbonate ester, a cyclic carbonate ester, or a mixture thereof. The types of the chain carbonate ester and cyclic carbonate ester used as other solvents are not particularly limited herein, and may be selected according to practical needs. In some embodiments, the other solvents may be at least one selected from: dimethyl carbonate, diethyl carbonate, dipropyl carbonate, methyl ethyl carbonate, methyl propyl carbonate, ethyl propyl carbonate, ethylene carbonate (or carbonic acid ethylene ester), propylene carbonate (or carbonic acid propylene ester), or butylene carbonate (or carbonic acid butylene ester), or γ-butyrolactone.

In some embodiments, the $D_{v50}$ of the first lithium iron phosphate material, a content $W_1$ of the first lithium iron phosphate material, and a content $W_2$ of the first solvent satisfy the following relation: $t = (W_1 \times W_2)/D_{v50}$, and $0.0006 \leq t \leq 12.8$, optionally $0.015 \leq t \leq 0.14$, and further optionally $0.03 \leq t \leq 0.12$.

The $D_{v50}$ is measured in μm, and both $W_1$ and $W_2$ are mass percent.

When t falls within the above range, the battery cell is ensured to exhibit good fast-charge performance without worsening the amount of gas generated during storage.

In some embodiments, the electrolyte solution further includes an additive. The additive includes a sultone of Formula II and/or a sulfate ester of Formula III:

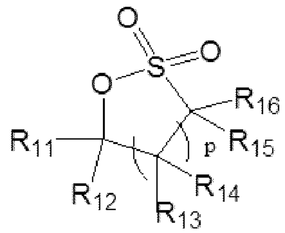

Formula II.

In the formula above, p is 1, 2, or 3, and optionally 1.

$R_{11}$ and $R_{12}$ each are independently selected from a hydrogen atom, a halogen atom, a $C_1$ to $C_6$ alkyl, a $C_1$ to $C_3$ haloalkyl, a $C_1$ to $C_3$ alkoxyl, or a $C_1$ to $C_3$ haloalkoxyl.

$R_{13}$ and $R_{14}$ each are independently selected from a hydrogen atom, a halogen atom, a $C_1$ to $C_6$ alkyl, a $C_1$ to $C_6$ haloalkyl, a $C_1$ to $C_6$ alkoxyl, or a $C_1$ to $C_3$ haloalkoxyl.

$R_{15}$ and $R_{16}$ each are independently selected from a hydrogen atom, a halogen atom, a $C_2$ to $C_6$ alkenyl, an ester group, a $C_1$ to $C_6$ alkyl, a $C_1$ to $C_6$ haloalkyl, a $C_1$ to $C_6$ alkoxyl, or a $C_1$ to $C_6$ haloalkoxyl; or $R_{15}$ and $R_{16}$ together form a carbonyl.

Alternatively, the sultone of Formula II is

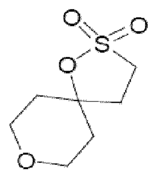

,

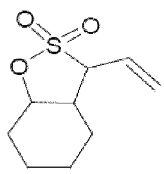

,

or

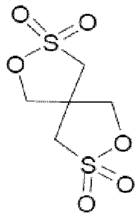

.

In some embodiments, $R_{11}$ and $R_{12}$ each are independently selected from a hydrogen atom, a halogen atom, a $C_1$ to $C_3$ alkyl, or a $C_1$ to $C_3$ haloalkyl. In some embodiments, $R_{11}$ is a hydrogen atom, and $R_{12}$ is a hydrogen atom, a $C_1$ to $C_3$ alkyl, or a halogen atom.

In some embodiments, $R_{13}$ and $R_{14}$ each are independently selected from a hydrogen atom, a halogen atom, a $C_1$ to $C_3$ alkyl, a $C_1$ to $C_3$ haloalkyl, a $C_1$ to $C_3$ alkoxyl, or a $C_1$ to $C_3$ haloalkoxyl. In some embodiments, $R_{13}$ and $R_{14}$ each independently are a hydrogen atom or a $C_1$ to $C_3$ alkyl.

In some embodiments, $R_{15}$ and $R_{16}$ each are independently selected from a hydrogen atom, a $C_1$ to $C_3$ alkyl, a $C_1$ to $C_3$ fluoroalkyl, or a $C_2$ to $C_3$ alkenyl; or $R_{15}$ and $R_{16}$ together form a carbonyl. In some embodiments, $R_{15}$ is a hydrogen atom, and $R_{16}$ is selected from a hydrogen atom, $C_1$ to $C_3$ alkyl, $C_1$ to $C_3$ fluoroalkyl, or a $C_2$ to $C_3$ alkenyl; or $R_{15}$ and $R_{16}$ together form a carbonyl.

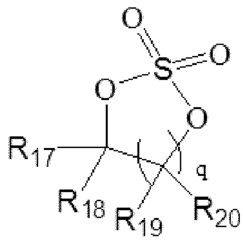

Formula III

In the formula above, q is 1, 2, or 3, and optionally 1.

$R_{17}$ and $R_{18}$ each are independently selected from a hydrogen atom, a halogen atom, a $C_2$ to $C_6$ alkenyl, a $C_1$ to $C_6$ alkyl, a $C_1$ to $C_6$ haloalkyl, a $C_1$ to $C_6$ alkoxyl, a $C_1$ to $C_6$ alkyloxyacyl, a $C_1$ to $C_6$ haloalkoxyl acyloxyl, a $C_1$ to $C_6$ alkyl, or a 4 to 6-membered cyclic sulfate ester group.

$R_{19}$ and $R_{20}$ each are independently selected from a hydrogen atom, a halogen atom, a $C_1$ to $C_6$ alkyl, a $C_1$ to $C_6$ haloalkyl, a $C_1$ to $C_6$ alkoxyl, a $C_1$ to $C_6$ haloalkoxyl, or an aryl (such as a phenyl).

Alternatively, the sulfonate ester of Formula III is

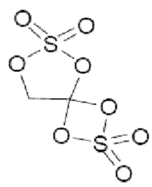

,

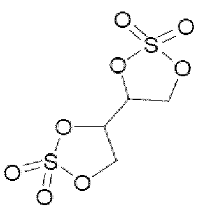

,

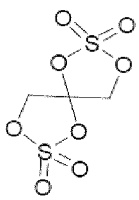

,

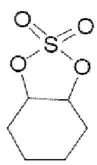

,

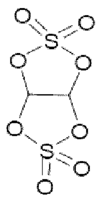

, or

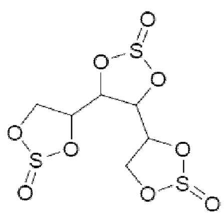

.

In some embodiments, $R_{17}$ and $R_{18}$ each are independently selected from a hydrogen atom, a halogen atom, a $C_2$ to $C_4$ alkenyl, a $C_1$ to $C_4$ alkyl, a $C_1$ to $C_3$ haloalkyl, a $C_1$ to $C_3$ alkoxyl, a $C_1$ to $C_3$ haloalkoxyl acyloxyl, a $C_1$ to $C_3$ alkyl, or a 4 to 6-membered cyclic sulfate ester group. In some embodiments, $R_{17}$ and $R_{18}$ each are independently selected from a hydrogen atom, a $C_1$ to $C_4$ alkyl, or a $C_1$ to $C_3$ alkyloxyacyl. In some embodiments, $R_{17}$ is a hydrogen atom, and $R_{18}$ is

selected from a hydrogen atom, $C_1$ to $C_4$ alkyl, or $C_1$ to $C_3$ alkyloxyacyl.

In some embodiments, $R_{19}$ and $R_{20}$ each are independently selected from a hydrogen atom, a halogen atom, or a $C_1$ to $C_6$ alkyl. In some embodiments, $R_{19}$ is a hydrogen atom, and $R_{20}$ is selected from a hydrogen atom, a halogen atom, or a $C_1$ to $C_6$ alkyl.

The electrolyte solution doped with the above additive can form a highly ionic-conductive polymer layer on the surface of the positive electrode material during charging, further improve the cycle performance of the secondary battery, and reduce the amount of gas generated during storage (reducing the volume expansion rate).

In some embodiments, the additive includes at least one of the following substances:

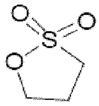
II-1

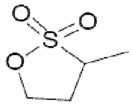
II-2

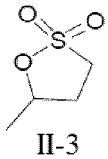
II-3

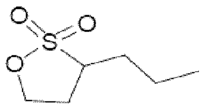
II-4

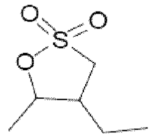
II-5

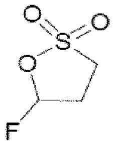
II-6

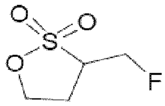
II-7

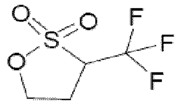
II-8

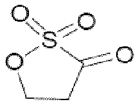
II-9

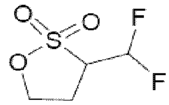
II-10

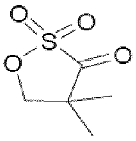
II-11

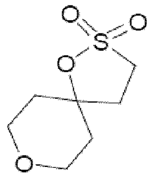
II-12

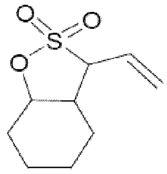
II-13

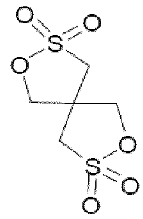
II-14

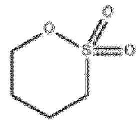
II-15

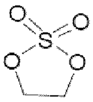
III-1

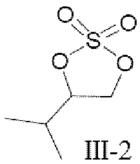
III-2

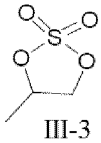
III-3

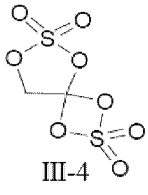
III-4

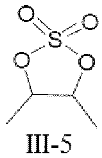
III-5

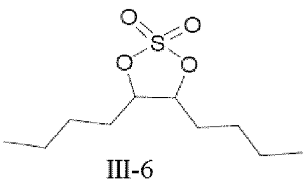
III-6

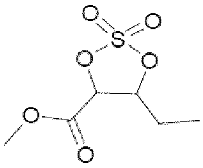
III-7

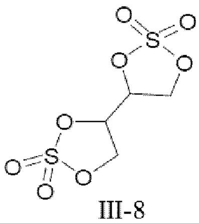
III-8

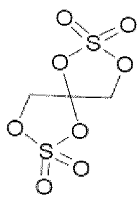
III-9

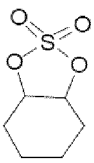
III-10

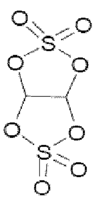
III-11

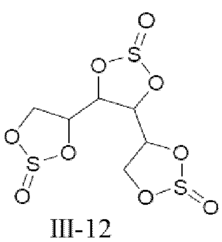
III-12

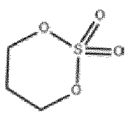
III-13

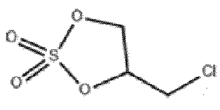
III-14

In some embodiments, the additive includes at least one of the following substances:

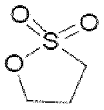
II-1

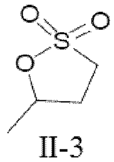
II-3

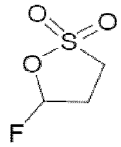
II-6

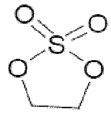
III-1

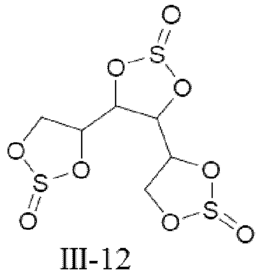
III-12

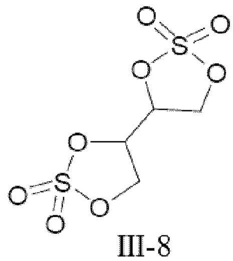
III-8

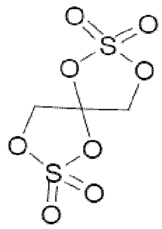
III-9

The above species selected additionally as an additive further improves the cycle performance of the battery and reduces the amount of gas generated during storage.

In some embodiments, a content $W_3$ of the additive is 0.005 wt% to 10 wt%, optionally 0.01 wt% to 5 wt%, and further optionally 0.05 wt% to 2 wt%, based on a total mass of the electrolyte solution. In some embodiments, the content $W_3$ of the additive may be 0.005 wt%, 0.01 wt%, 0.05 wt%, 0.1 wt%, 1 wt%, 2 wt%, 5 wt%, or 10 wt%, or $W_3$ may fall within a range formed by any two thereof. The additive added at the above mass percent further improves the cycle performance and storage performance of the battery.

In some embodiments, the content $W_3$ of the additive and the content $W_1$ of the first lithium iron phosphate material satisfy the following relation: $n = W_1/W_3$, and $2 < n < 8000$, optionally $3 \leq n \leq 6000$, further optionally $10 < n < 800$, and still further optionally $15 \leq n \leq 600$. Both $W_1$ and $W_3$ are mass percent. In some embodiments, n may be 3, 6, 15, 30, 300, 600, 3000, or 6000, or n may fall within a range formed by any two thereof. When the mass percent of the material with a relatively small $D_{v50}$ value is constant, by making n fall within the above range, this application implements sufficient film formation on the surface of the positive electrode. Therefore, the resistance on the surface of the positive electrode is relatively low, thereby reducing the gas generated during storage and improving the fast-charge performance and cycle performance.

In some embodiments, the $D_{v50}$ of the second lithium iron phosphate material is 6 μm to 20 μm, optionally 7 μm to 16 μm, and further optionally 7 μm to 12 μm. In some embodiments, the $D_{v50}$ of the second lithium iron phosphate material is 6 μm, 7 μm, 10 μm, 12 μm, 16 μm, or 20 μm, or, the $D_{v50}$ may fall within a range formed by any two thereof. The $D_{v50}$ of the second lithium iron phosphate material falling within the above range further improves the overall performance of the battery.

A second aspect of this application provides an electrical device. The electrical device includes the secondary battery disclosed in the first aspect of this application.

The secondary battery of this application may be in the form of a battery cell, a battery module, a battery pack, or the like.

The following describes a battery cell, a battery module, a battery pack, and an electrical device of this application with due reference to drawings.

Generally, a battery cell further includes a positive electrode plate, an electrolyte, and a separator. In a charge-discharge cycle of the battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions.

**[Positive electrode plate]**

As mentioned above, the positive electrode plate includes a positive current collector and a positive electrode material layer (also known as a positive electrode film layer) disposed on at least one surface of the positive current collector. The positive electrode material layer includes a positive active material.

As an example, the positive current collector includes two surfaces opposite to each other in a thickness direction

of the positive current collector. The positive electrode film layer is disposed on either or both of the two opposite surfaces of the positive current collector.

In some embodiments, the positive current collector may be a metal foil or a composite current collector. For example, the metal foil may be aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the positive material layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the mass percent of the binder is 0.1% to 4%, optionally 0.5% to 2%, based on the total mass of the positive electrode material layer.

In some embodiments, the positive material layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the mass percent of the conductive agent is 0.1% to 4%, optionally 0.5% to 2%, based on the total mass of the positive electrode material layer.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold pressing to obtain the positive electrode plate.

**[Negative electrode plate]**

The negative electrode plate includes a negative current collector and a negative electrode material layer (also known as a negative electrode film layer) disposed on at least one surface of the negative current collector. The negative electrode material layer includes a negative active material.

As an example, the negative current collector includes two surfaces opposite to each other in a thickness direction of the negative current collector. The negative electrode film layer is disposed on either or both of the two opposite surfaces of the negative current collector.

In some embodiments, the negative current collector may be a metal foil or a composite current collector. For example, the metal foil may be copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative active material may be a negative active material well-known in the art for use in a battery. As an example, the negative active material may include at least one of the following materials: artificial graphite, natural graphite, soft carbon, hard carbon, silicon-based material, tin-based material, lithium titanium oxide, and the like. The silicon-based material may be at least one selected from elemental silicon, a silicon-oxygen compound, a silicon-carbon composite, a silicon-nitrogen composite, and a silicon alloy. The tin-based material may be at least one selected from elemental tin, a tin-oxygen compound, or a tin alloy. However, this application is not limited to such materials, and other conventional materials usable as a negative active material of a battery may be used instead. One of the negative active materials may be used alone, or at least two thereof may be used in combination.

In some embodiments, the mass percent of the negative active material is 75% to 99%, optionally 80% to 98%, based on the total mass of the negative electrode material layer.

In some embodiments, the negative electrode material layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the mass percent of the binder is 0.1% to 3.5%, optionally 0.5% to 2.5%, based on the total mass of the negative electrode material layer.

In some embodiments, the negative material layer further optionally includes a conductive agent. The conductive agent may be at least one selected from superconductive carbon, acetylene black, carbon black, Ketjen black, carbon

dots, carbon nanotubes, graphene, or carbon nanofibers.

In some embodiments, the mass percent of the conductive agent is 0.04% to 5%, optionally 0.3% to 3%, based on the total mass of the negative electrode material layer.

In some embodiments, the negative material layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (such as deionized water) to form a negative electrode slurry, coating a negative current collector with the negative electrode slurry, and performing steps such as drying and cold calendering to obtain the negative electrode plate.

**[Electrolyte]**

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is an electrolyte solution. The electrolyte solution includes an electrolyte salt and the above-mentioned solvent.

In some embodiments, the electrolyte salt may be at least one selected from lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, a concentration of the electrolyte salt in the nonaqueous electrolyte solution is, for example, at least 0.3 mole/liter (mol/L), optionally at least 0.7 mol/L, optionally at most 1.7 mol/L, and further optionally at most 1.2 mol/L.

In some embodiments, the electrolyte solution further optionally includes an additive. For example, the additive may include a negative electrode film-forming additive or a positive electrode film-forming additive. The additive may further include an additive capable of improving specified performance of the battery, for example, an additive for improving overcharge performance of the battery, or an additive for improving high- or low-temperature performance of the battery.

**[Separator]**

In some embodiments, the battery cell further includes a separator. The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials in different layers may be identical or different, without being particularly limited.

**[Outer package]**

In some embodiments, the battery cell may include an outer package configured to package the positive electrode plate, the negative electrode plate, and the electrolyte. As an example, the positive electrode plate, the negative electrode plate, and the separator may be stacked or wound to form a stacked-type battery cell or a jelly-roll battery cell. The battery cell is packaged in the outer package. The electrolyte is the electrolyte solution described in the first aspect of this application, and the electrolyte solution infiltrates in the battery cell. The number of battery cells in a battery cell may be one or more, and may be adjusted as required.

In an embodiment, this application provides an electrode assembly. In some embodiments, the positive electrode plate, the negative electrode plate, and the separator may be made into an electrode assembly by winding or stacking. The outer package may be configured to package the electrode assembly and the electrolyte.

In some embodiments, the outer package of the battery cell may be a soft package such as a pouch-type soft package. The material of the soft package may be plastic such as one or more of polypropylene (PP), polybutylene terephthalate (PBT), or polybutylene succinate (PBS). In some embodiments, the outer package of the battery cell may be a hard shell such as a hard plastic shell, an aluminum shell, a steel shell, or the like. The shape of the battery cell is not particularly limited in this application, and may be cylindrical, prismatic or in any other shape. For example, FIG. 1 shows a prismatic battery cell 5 as an example.

In some embodiments, referring to FIG. 2, the outer package may include a housing 51 and a cover plate 53. The housing 51 may include a bottom plate and a side plate connected to the bottom plate. The bottom plate and the side plate close in to form an accommodation cavity. The housing 51 is provided with an opening that communicates to the accommodation cavity. The cover plate 53 can be placed over the opening to seal the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 included in a battery cell 5 may be one or more, and may be determined by a person skilled in the art as actually required.

In some embodiments, the battery cell may be assembled into a battery module. The battery module may include one or more battery cells, and the specific number of battery cells in a battery module may be selected by a person skilled in the art depending on the application scenario and capacity of the battery module.

FIG. 3 shows a battery module 4 as an example. Referring to FIG. 3, in the battery module 4, a plurality of battery cells 5 may be arranged sequentially along a length direction of the battery module 4. Alternatively, the secondary batteries may be arranged in any other manner. Further, the plurality of battery cells 5 may be fixed by a fastener.

Optionally, the battery module 4 may further include a shell that provides an accommodation space. The plurality of battery cells 5 are accommodated in the accommodation space.

In some embodiments, the battery cells or battery modules may be assembled to form a battery pack. The battery pack may include one or more battery cells or battery modules. The specific number of battery cells or battery modules in a battery pack may be selected by a person skilled in the art depending on the use and capacity of the battery pack.

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

In addition, this application further provides an electrical device. The electrical device includes at least one of the battery cell, battery module, or battery pack disclosed in this application. The battery cell, battery module, or battery pack may be used as a power supply of the electrical device, or used as an energy storage unit of the electrical device. The electrical devices may include, but are not limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The battery cell, battery module, or battery pack may be selected for use in the electrical device according to practical requirements.

FIG. 6 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

## Embodiments

The following describes some embodiments of this application. The embodiments described below are illustrative, and are merely intended to construe this application but not to limit this application. Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### Embodiment 1

1. Preparing a secondary battery

(1) Electrolyte solution

Mixing ethylene carbonate (EC) and ethyl methyl carbonate (EMC) evenly at a volume ratio of 3: 7 in an argon atmosphere glovebox (in which the content of $H_2O$ is less than 0.1 ppm, and the content of $O_2$ is less than 0.1 ppm). Adding methyl acetate at a mass percent of 60 wt% based on the total mass of the solvent. Subsequently, adding and dissolving a $LiPF_6$ lithium salt in the organic solvent, making the concentration of the $LiPF_6$ be 12.5%, and stirring well to obtain an electrolyte solution.

(2) Positive electrode plate

Mixing a first lithium iron phosphate ($LiFePO_4$ or LFP) material (the $D_{v50}$ of the material is 2 μm, and the mass percent of the material is 30 wt%, based on the total mass of the first and second lithium iron phosphate materials) and a second lithium iron phosphate material (the $D_{v50}$ of the material is 10 μm, and the mass percent of the material is 70 wt%, based on the total mass of the first and second lithium iron phosphate materials), and adding the mixture, a conductive agent acetylene black, and a binder polyvinylidene difluoride (PVDF) at a mass ratio of 90: 5: 5 into an N-methylpyrrolidone (NMP) solvent. Stirring well to obtain a positive electrode slurry (in which the solid content is 67%). Subsequently, applying the positive electrode slurry evenly onto a positive current collector so that the concentration of the film layer is 350 mg/1540.25 $mm^2$ on a single side of the positive electrode plate, and then performing oven-drying, cold-pressing, and slitting to obtain a positive electrode plate.

(3) Separator: Using a conventional commercial polypropylene film as a separator.

(4) Negative electrode plate

Dissolving artificial graphite as an active material, carbon black as a conductive agent, styrene-butadiene rubber (SBR) as a binder, sodium carboxymethyl cellulose (CMC-Na) as a thickener at a mass ratio of 90: 4: 4: 2 in a deionized water solvent, and mixing the constituents evenly to form a negative electrode slurry (with a solid content of 48%). Applying the negative electrode slurry onto a negative current collector copper foil evenly at one or more times (until the coating percentage is 97.2%), and performing the steps of oven-drying, cold-pressing, and slitting to obtain a negative electrode plate.

(5) Assembling a battery

Stacking the positive electrode plate (87 mm width × 605 mm length), the separator (98 mm width × 1896 mm length), and the negative electrode plate (93 mm width × 735 mm length) in sequence so that the separator is located between the positive electrode plate and the negative electrode plate to serve a purpose of isolation, and then winding the stacked plates to obtain an electrode assembly; placing the electrode assembly into a battery housing, performing drying and then injecting 158.1 grams of electrolyte solution (51 Ah, injection coefficient 3.0 g/Ah), and performing steps such as chemical formation and static standing to obtain a lithium-ion battery.

2. Testing the charging time

Performing a charge-discharge test on a graded battery at 25 °C at a voltage of 2.5 V to 3.65 V. The test steps are: charging a battery at a constant current of 3C until the state of charge reaches 30%SoC, and then charging the battery at a constant current of 2C until 60%SoC, and charging the battery at 1C constant current until 80%SoC, and then maintaining a constant voltage and charging the battery at the constant voltage until the current reaches a cut-off current of 0.01C; leaving the battery to stand for 5 minutes, and then discharging the battery at a constant current of 1C until the voltage reaches 2.0 V, and leaving the battery to stand for 5 minutes. Determining the time spent in charging the battery to 80% SoC.

3. Testing the volume expansion rate

Charging the lithium-ion secondary battery at a constant current of 0.33C until the voltage reaches 3.65 V, and then charging the battery at a constant voltage of 3.65 V until the current reaches 0.05C so that the lithium-ion battery is fully charged. Measuring the volume of the battery by using a drainage method. Recording the volume at this time as a before-storage volume. Subsequently, storing the lithium-ion battery at 60 °C for 60 days. Placing the lithium-ion secondary battery in a 25 °C environment upon completion of the storage, and measuring the volume of the battery by using a drainage method. Recording the volume at this time as an after-storage volume. Calculating the volume expansion rate of the battery according to the following formula:

$$\text{volume expansion rate of the battery} = \left(\frac{\text{volume after storage}}{\text{volume before storage}} - 1\right) \times 100\%.$$

4. Testing the number of cycles counted when the battery capacity fades to 80% after cycling at 60 °C

Charging the battery at a constant current of 0.5C at 60 °C until the voltage reaches 3.65 V, and then charging the battery at a constant voltage of 3.65 V until the current is less than 0.05C, and then discharging the lithium-ion battery at a constant current of 0.5C until the voltage reaches 2.5 V, thereby completing one charge-discharge cycle (that is, 1 cycle). Repeating the above operations to charge and discharge the battery, and recording the number of cycles when the capacity retention rate drops to 80%.

**Embodiments 2 to 6**

The preparation method and test method in Embodiments 2 to 6 are similar to those in Embodiment 1 except the $D_{v50}$ of the first lithium iron phosphate material. The detailed parameters and test results are shown in Table 1.

**Embodiments 7 to 8**

The preparation method and test method in Embodiments 7 to 8 are similar to those in Embodiment 1 except that the first solvents in these two embodiments are ethyl difluoroacetate and methyl difluoroacetate respectively. The detailed parameters and test results are shown in Table 1.

**Comparative Embodiments 1 to 2**

The preparation method and test method in Comparative Embodiments 1 to 2 are similar to those in Embodiment 1 except the $D_{v50}$ of the first lithium iron phosphate material and the first solvent. The detailed parameters and test results are shown in Table 1.

**Comparative Embodiments 3 to 5**

In Comparative Embodiment 3, the positive active material is solely the first lithium iron phosphate material ($D_{v50}$ is 2 μm); in Comparative Embodiment 4, the positive active material is solely the second lithium iron phosphate material ($D_{v50}$ is 10 μm); and, in Comparative Embodiment 5, dimethyl carbonate is used as the first solvent instead of the methyl acetate in Embodiment 1, accounting for 60 wt%. The rest is the same as that in Embodiment 1.

**Embodiments 9 to 16**

The preparation method and test method in Embodiments 9 to 16 are similar to those in Embodiment 1 except the content $W_1$ of the first lithium iron phosphate material. The detailed parameters and test results are shown in Table 1.

**Embodiments 17 to 24**

The preparation method and test method in Embodiments 17 to 24 are similar to those in Embodiment 1 except the content $W_2$ of the first solvent. The detailed parameters and test results are shown in Table 1.

**Table 1**

| Serial number | $D_{v50}$ of first material[1] (μm) | Content $W_1$ of first material[2] (%) | First solvent | | t | Charge time (min) | Volume expansion rate[3] (%) | Number of cycles[4] (cls) |
|---|---|---|---|---|---|---|---|---|
| | | | Type | $W_2$ (%) | | | | |
| Embodiment 1 | 2 | 30 | Methyl acetate | 60 | 0.09 | 27.1 | 6.7 | 1203 |
| Embodiment 2 | 0.05 | 30 | Methyl acetate | 60 | 3.6 | 26.2 | 8.9 | 897 |
| Embodiment 3 | 1 | 30 | Methyl acetate | 60 | 0.18 | 26.7 | 7.8 | 923 |
| Embodiment 4 | 3 | 30 | Methyl acetate | 60 | 0.06 | 27.9 | 6.5 | 1211 |
| Embodiment 5 | 4 | 30 | Methyl acetate | 60 | 0.045 | 28.5 | 6.3 | 1219 |
| Embodiment 6 | 6 | 30 | Methyl acetate | 60 | 0.03 | 29.4 | 6 | 1232 |
| Embodiment 7 | 2 | 30 | Ethyl acetate | 60 | 0.09 | 28.7 | 5.6 | 1212 |

(continued)

| Serial number | $D_{v50}$ of first material[1] (μm) | Content $W_1$ of first material[2] (%) | First solvent | | t | Charge time (min) | Volume expansion rate[3] (%) | Number of cycles[4] (cls) |
|---|---|---|---|---|---|---|---|---|
| | | | Type | $W_2$ (%) | | | | |
| Embodiment 8 | 2 | 30 | Methyl difluoroacetate | 60 | 0.09 | 30.6 | 6.9 | 951 |
| Embodiment 9 | 2 | 30 | Difluoroethyl acetate | 60 | 0.09 | 31.5 | 6.0 | 987 |
| Comparative Embodiment 1 | 0.03 | 30 | Dimethyl carbonate | 60 | - | 37.1 | 6.2 | 1125 |
| Comparative Embodiment 2 | 10 | 30 | Dimethyl carbonate | 60 | - | 40.1 | 49 | 1242 |
| Comparative Embodiment 3 | 2 | 100 | Methyl acetate | 60 | - | 26.5 | 15.7 | 701 |
| Comparative Embodiment 4 | - | - | Ethyl acetate | 60 | - | 35.9 | 3.5 | 1251 |
| Comparative Embodiment 5 | 2 | 30 | Dimethyl carbonate | 60 | - | 38.7 | 5.4 | 1231 |
| Embodiment 10 | 2 | 1 | Methyl acetate | 60 | 0.003 | 35.5 | 3.7 | 1331 |
| Embodiment 11 | 2 | 2 | Methyl acetate | 60 | 0.006 | 34.3 | 4.1 | 1321 |
| Embodiment 12 | 2 | 10 | Methyl acetate | 60 | 0.03 | 31.5 | 5.1 | 1293 |
| Embodiment 13 | 2 | 20 | Methyl acetate | 60 | 0.06 | 29.2 | 6.5 | 1255 |
| Embodiment 14 | 2 | 40 | Methyl acetate | 60 | 0.12 | 27.0 | 8.7 | 1101 |
| Embodiment 15 | 2 | 60 | Methyl acetate | 60 | 0.18 | 26.8 | 9.1 | 1021 |
| Embodiment 16 | 2 | 80 | Methyl acetate | 60 | 0.24 | 26.5 | 9.7 | 980 |
| Embodiment 17 | 2 | 90 | Methyl acetate | 60 | 0.27 | 26.1 | 9.8 | 701 |
| Embodiment 18 | 2 | 30 | Methyl acetate | 10 | 0.015 | 37.1 | 3.3 | 1566 |
| Embodiment 19 | 2 | 30 | Methyl acetate | 20 | 0.03 | 35.7 | 3.5 | 1541 |
| Embodiment 20 | 2 | 30 | Methyl acetate | 30 | 0.045 | 34.2 | 3.9 | 1475 |
| Embodiment 21 | 2 | 30 | Methyl acetate | 40 | 0.06 | 32.5 | 4.3 | 1358 |
| Embodiment 22 | 2 | 30 | Methyl acetate | 50 | 0.075 | 30.1 | 4.9 | 1301 |
| Embodiment 23 | 2 | 30 | Methyl acetate | 70 | 0.105 | 26.1 | 7.5 | 1185 |

(continued)

| Serial number | $D_{v50}$ of first material[1] (μm) | Content $W_1$ of first material[2] (%) | First solvent | | t | Charge time (min) | Volume expansion rate[3] (%) | Number of cycles[4] (cls) |
|---|---|---|---|---|---|---|---|---|
| | | | Type | $W_2$ (%) | | | | |
| Embodiment 24 | 2 | 30 | Methyl acetate | 80 | 0.12 | 25.2 | 8.3 | 1105 |
| Embodiment 25 | 2 | 30 | Methyl acetate | 90 | 0.135 | 24.3 | 11.5 | 762 |

1. The "first material" here means the "first lithium iron phosphate material"; and similarly, the "second material" hereinafter means the "second lithium iron phosphate material".
2. In Table 1 and Table 2, $W_1$, $W_2$, and $W_3$ are mass percent.
3. The volume expansion rate is a volume expansion rate of a 100%SoC battery stored at 60 °C for 30 days.
4. The number of cycles is a number of cycles counted when the capacity retention rate drops to 80% after cycling at 60 °C.

As can be seen from Embodiments 1 to 9 and Comparative Embodiments 1 to 5, the secondary battery of this application is superior in overall performance, and exhibits good fast-charge capabilities, a low amount of gas generated during storage (a relatively low volume expansion rate), and good cycle performance (especially at high temperature). In addition, when the $D_{v50}$ of the first lithium iron phosphate material is 0.05 μm to 6 μm, optionally 1 μm to 4 μm, the material is more conducive to improving the fast-charge performance of the battery, reducing the volume expansion rate, and achieving good cycle performance. In addition, when $t = (W_1 \times W_2)/D_{v50}$, and $0.0006 \leq t \leq 12.8$, the battery cell is ensured to exhibit good fast-charge performance without worsening the amount of gas generated during storage.

As can be seen from Embodiments 10 to 17, when the content $W_1$ of the first lithium iron phosphate material is 2 wt% to 80 wt% based on the total mass of the first and second lithium iron phosphate materials, the secondary battery exhibits balanced and higher overall performance, that is, good fast-charge performance and cycle performance, and a relatively low volume expansion rate after storage.

As can be seen from Embodiments 18 to 25, when the content $W_2$ of the first solvent is 20 wt% to 80 wt% based on the total mass of the solvent, the secondary battery exhibits desirable overall performance.

Embodiments 26 to 30

The preparation method and test method in Embodiments 26 to 30 are substantially identical to those in Embodiment 1 except the $D_{v50}$ of the second lithium iron phosphate material. The $D_{v50}$ and test results in different embodiments are detailed in Table 2.

**Table 2**

| Serial number | $D_{v50}$ of second material (μm) | Charge time (min) | Volume expansion rate (%) | Number of cycles (cls) |
|---|---|---|---|---|
| Embodiment 26 | 6 | 26.8 | 7.5 | 1081 |
| Embodiment 27 | 7 | 26.9 | 7.2 | 1121 |
| Embodiment 1 | 10 | 27.1 | 6.7 | 1203 |
| Embodiment 28 | 12 | 27.5 | 6.6 | 1211 |
| Embodiment 29 | 16 | 27.9 | 6.3 | 1217 |
| Embodiment 30 | 20 | 28.1 | 6.2 | 1221 |

As can be seen from Table 2 above, when the $D_{v50}$ of the second lithium iron phosphate material falls within the range of 6 μm to 20 μm, especially within the range of 7 μm to 12 μm, the material is more conducive to improving the overall performance of the battery.

**Embodiments 31 to 52**

The preparation method and test method in Embodiments 30 to 38 are similar to those in Embodiment 1 except that an additive represented by Formula II or Formula III is added at a mass percent of 1 wt% based on the total mass of the electrolyte solution. The content of the additive represented by Formula II-8 in Embodiments 39 to 45 is different from that in Embodiment 33; and the content of the additive represented by Formula II-1 in Embodiments 46 to 52 is different from that in Embodiment 34. The detailed parameters and test results are shown in Table 3 below.

**Table 3**

| Serial number | $D_{v50}$ of first material (μm) | Content $W_1$ of first material (%) | First solvent | | Additive | | n | Charge time (min) | Volume expansion rate* (%) | Number of cycles (cls) |
|---|---|---|---|---|---|---|---|---|---|---|
| | | | Type | $W_2$ (%) | Type | $W_3$ (%) | | | | |
| Embodiment 31 | 2 | 30 | Methyl acetate | 60 | II-3 | 1 | 30 | 29.2 | 5.1 | 1298 |
| Embodiment 32 | 2 | 30 | Methyl acetate | 60 | II-6 | 1 | 30 | 28.4 | 4.5 | 1315 |
| Embodiment 33 | 2 | 30 | Methyl acetate | 60 | III-8 | 1 | 30 | 27.4 | 4.7 | 1388 |
| Embodiment 34 | 2 | 30 | Methyl acetate | 60 | II-1 | 1 | 30 | 27.2 | 4.1 | 1455 |
| Embodiment 35 | 2 | 30 | Ethyl acetate | 60 | III-8 | 1 | 30 | 29.2 | 3.9 | 1412 |
| Embodiment 36 | 2 | 30 | Methyl difluoroacetate | 60 | III-8 | 1s | 30 | 31.5 | 4.8 | 1341 |
| Embodiment 37 | 2 | 30 | Ethyl acetate | 60 | II-1 | 1 | 30 | 28.9 | 3.7 | 1501 |
| Embodiment 38 | 2 | 30 | Methyl difluoroacetate | 60 | II-1 | 1 | 30 | 31.4 | 4.7 | 1387 |
| Embodiment 39 | 2 | 30 | Methyl acetate | 60 | III-8 | 0.005 | 6000 | 27.6 | 6.4 | 1271 |
| Embodiment 40 | 2 | 30 | Methyl acetate | 60 | III-8 | 0.01 | 3000 | 27.6 | 6.2 | 1305 |
| Embodiment 41 | 2 | 30 | Methyl acetate | 60 | III-8 | 0.05 | 600 | 27.5 | 5.8 | 1321 |
| Embodiment 42 | 2 | 30 | Methyl acetate | 60 | III-8 | 0.1 | 300 | 27.5 | 5.4 | 1335 |
| Embodiment 43 | 2 | 30 | Methyl acetate | 60 | III-8 | 2 | 15 | 27.7 | 4.3 | 1376 |
| Embodiment 44 | 2 | 30 | Methyl acetate | 60 | III-8 | 5 | 6 | 28.7 | 4.1 | 1377 |
| Embodiment 45 | 2 | 30 | Methyl acetate | 60 | III-8 | 10 | 3 | 30.7 | 3.8 | 1391 |
| Embodiment 46 | 2 | 30 | Methyl acetate | 60 | II-1 | 0.005 | 6000 | 27.2 | 6.3 | 1289 |
| Embodiment 47 | 2 | 30 | Methyl acetate | 60 | II-1 | 0.01 | 3000 | 27.2 | 6 | 1351 |
| Embodiment 48 | 2 | 30 | Methyl acetate | 60 | II-1 | 0.05 | 600 | 27.2 | 5.3 | 1276 |

(continued)

| Serial number | $D_{v50}$ of first material (μm) | Content $W_1$ of first material (%) | First solvent | | Additive | | n | Charge time (min) | Volume expansion rate* (%) | Number of cycles (cls) |
|---|---|---|---|---|---|---|---|---|---|---|
| | | | Type | $W_2$ (%) | Type | $W_3$ (%) | | | | |
| Embodiment 49 | 2 | 30 | Methyl acetate | 60 | II-1 | 0.1 | 300 | 27.2 | 5.1 | 1387 |
| Embodiment 50 | 2 | 30 | Methyl acetate | 60 | II-1 | 2 | 15 | 27.8 | 3.9 | 1476 |
| Embodiment 51 | 2 | 30 | Methyl acetate | 60 | II-1 | 5 | 6 | 28.5 | 3.8 | 1457 |
| Embodiment 52 | 2 | 30 | Methyl acetate | 60 | II-1 | 10 | 3 | 30.4 | 3.7 | 1485 |

As can be seen from Table 2, by adding the additive represented by Formula II or Formula III, especially at a mass percent of 0.005 wt% to 10 wt% based on the total mass of the electrolyte solution, this application further improves the performance of the battery, for example, improves the cycle performance and reduces the amount of gas generated.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A secondary battery, comprising a positive electrode plate and an electrolyte solution, wherein the positive electrode plate comprises a current collector and a positive electrode material layer disposed on at least one side of the current collector, the positive electrode material layer comprises a first lithium iron phosphate material and a second lithium iron phosphate material, $D_{v50}$ of the second lithium iron phosphate material is greater than $D_{v50}$ of the first lithium iron phosphate material, and the $D_{v50}$ of the first lithium iron phosphate material is 0.05 μm to 6 μm; and

   the electrolyte solution comprises a solvent, and the solvent comprises a first solvent that is at least one selected from compounds represented by Formula I:

   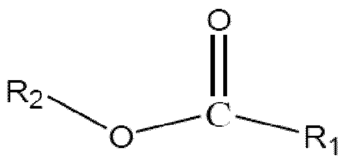

   Formula I

   wherein $R_1$ and $R_2$ each are independently selected from a $C_1$ to $C_6$ alkyl or a $C_1$ to $C_6$ haloalkyl.

2. The secondary battery according to claim 1, wherein the $D_{v50}$ of the first lithium iron phosphate material is 0.05 μm to 4 μm, optionally 1 μm to 4 μm, and further optionally 2 μm to 4 μm.

3. The secondary battery according to claim 1 or 2, wherein a content $W_1$ of the first lithium iron phosphate material is 2 wt% to 80 wt%, optionally 20 wt% to 60 wt%, and further optionally 20 wt% to 40 wt%, based on a total mass of the first and second lithium iron phosphate materials.

4. The secondary battery according to any one of claims 1 to 3, wherein $R_1$ and $R_2$ each are independently selected from a $C_1$ to $C_4$ alkyl or a $C_1$ to $C_4$ haloalkyl, and optionally $R_1$ and $R_2$ each are independently selected from methyl, ethyl, propyl, fluoromethyl, fluoroethyl, or fluoropropyl.

**5.** The secondary battery according to any one of claims 1 to 4, wherein the compound of Formula I is at least one selected from the following compounds:

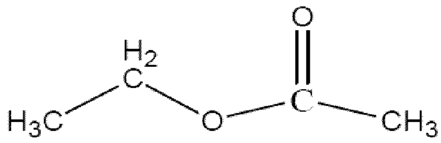
I-1

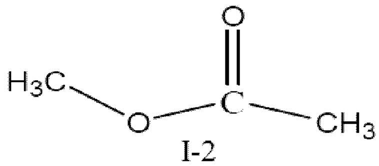
I-2

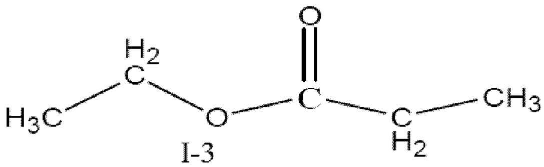
I-3

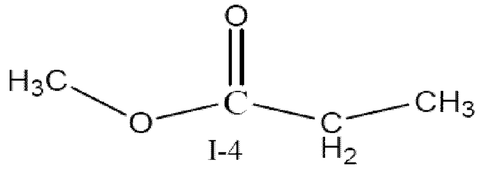
I-4

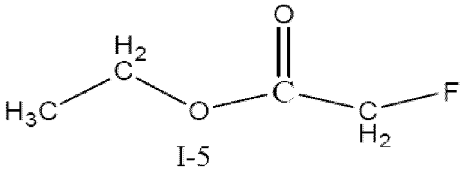
I-5

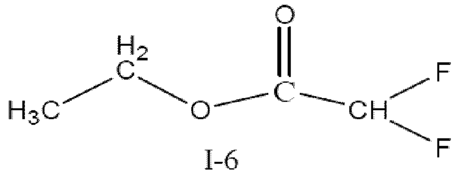
I-6

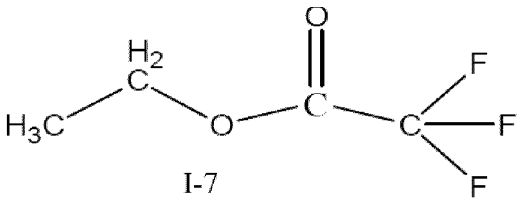
I-7

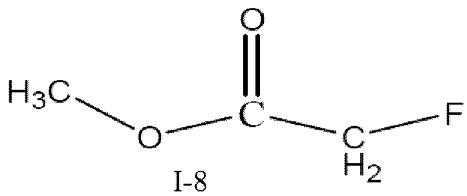
I-8

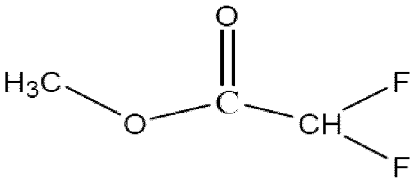
I-9

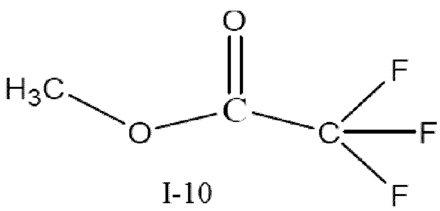
I-10

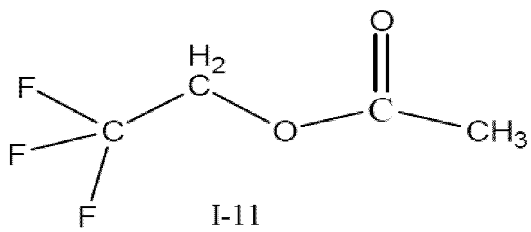
I-11

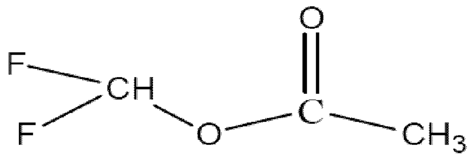
I-12

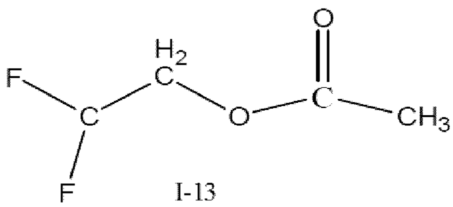
I-13

;

and

optionally, the compound of Formula I is at least one selected from the following compounds:

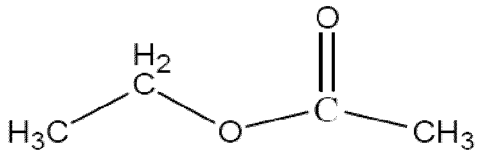

I-1

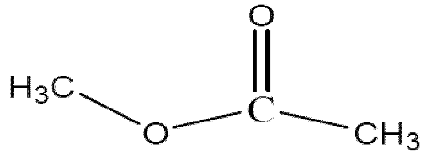

I-2

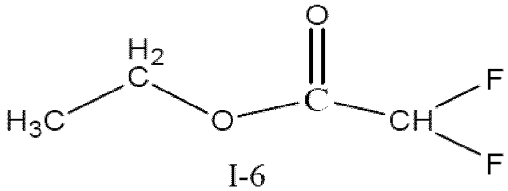

I-6

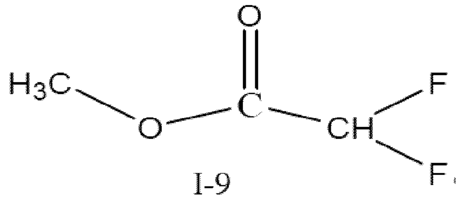

I-9

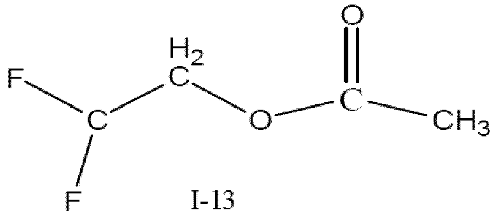

I-13

**6.** The secondary battery according to any one of claims 1 to 5, wherein a content $W_2$ of the first solvent is 20 wt% to 80 wt%, optionally 30 wt% to 70 wt%, and further optionally 50 wt% to 70 wt%, based on a total mass of the solvent.

**7.** The secondary battery according to any one of claims 1 to 6, wherein the $D_{v50}$ of the first lithium iron phosphate material, a content $W_1$ of the first lithium iron phosphate material, and a content $W_2$ of the first solvent satisfy the following relation:

$t = (W_1 \times W_2)/D_{v50}$, and $0.0006 \leq t \leq 12.8$, optionally $0.015 \leq t \leq 0.14$, and further optionally $0.03 \leq t \leq 0.12$; and the $D_{v50}$ is measured in μm, and both $W_1$ and $W_2$ are mass percent.

**8.** The secondary battery according to any one of claims 1 to 7, wherein the electrolyte solution further comprises an additive, and the additive comprises a sultone of Formula II and/or a sulfate ester of Formula III:

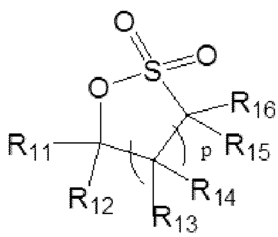

Formula II

wherein, p is 1, 2, or 3, and optionally 1;

$R_{11}$ and $R_{12}$ each are independently selected from a hydrogen atom, a halogen atom, a $C_1$ to $C_6$ alkyl, a $C_1$ to $C_3$ haloalkyl, a $C_1$ to $C_3$ alkoxyl, or a $C_1$ to $C_3$ haloalkoxyl; optionally, $R_{11}$ and $R_{12}$ each are independently selected from a hydrogen atom, a halogen atom, a $C_1$ to $C_3$ alkyl, or a $C_1$ to $C_3$ haloalkyl; and further optionally, $R_{11}$ is a hydrogen atom, and $R_{12}$ is a hydrogen atom, a $C_1$ to $C_3$ alkyl, or a halogen atom;

$R_{13}$ and $R_{14}$ each are independently selected from a hydrogen atom, a halogen atom, a $C_1$ to $C_6$ alkyl, a $C_1$ to $C_6$ haloalkyl, a $C_1$ to $C_6$ alkoxyl, or a $C_1$ to $C_3$ haloalkoxyl; optionally, $R_{13}$ and $R_{14}$ each are independently selected from a hydrogen atom, a halogen atom, a $C_1$ to $C_3$ alkyl, or a $C_1$ to $C_3$ haloalkyl, a $C_1$ to $C_3$ alkoxyl, or $C_1$ to $C_3$ haloalkoxyl; and further optionally, $R_{13}$ and $R_{14}$ each independently are a hydrogen atom or a $C_1$ to $C_3$ alkyl;

$R_{15}$ and $R_{16}$ each are independently selected from a hydrogen atom, a halogen atom, a $C_2$ to $C_6$ alkenyl, an ester group, a $C_1$ to $C_6$ alkyl, a $C_1$ to $C_6$ haloalkyl, a $C_1$ to $C_6$ alkoxyl, or a $C_1$ to $C_6$ haloalkoxyl, and optionally, from a hydrogen atom, a $C_1$ to $C_3$ alkyl, a $C_1$ to $C_3$ fluoroalkyl, or a $C_2$ to $C_3$ alkenyl; or $R_{15}$ and $R_{16}$ together form a

carbonyl;
or
the sultone of Formula II is

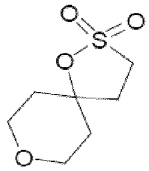, 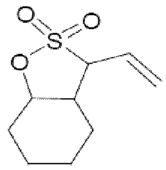, or 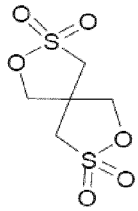;

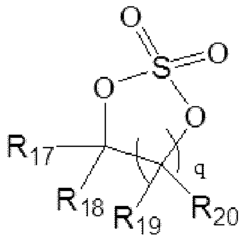 Formula III

wherein, q is 1, 2, or 3, and optionally 1;
$R_{17}$ and $R_{18}$ each are independently selected from a hydrogen atom, a halogen atom, a $C_2$ to $C_6$ alkenyl, a $C_1$ to $C_6$ alkyl, a $C_1$ to $C_6$ haloalkyl, a $C_1$ to $C_6$ alkoxyl, a $C_1$ to $C_6$ alkyloxyacyl, a $C_1$ to $C_6$ haloalkyloxyl acyloxyl, a $C_1$ to $C_6$ alkyl, or a 4 to 6-membered cyclic sulfate ester group; optionally, $R_{17}$ and $R_{18}$ each are independently selected from a hydrogen atom, a halogen atom, a $C_2$ to $C_4$ alkenyl, a $C_1$ to $C_4$ alkyl, a $C_1$ to $C_3$ haloalkyl, a $C_1$ to $C_3$ alkoxyl, a $C_1$ to $C_3$ haloalkoxyl acyloxyl, a $C_1$ to $C_3$ alkyl, or a 4 to 6-membered cyclic sulfate ester group; and further optionally, $R_{17}$ and $R_{18}$ each are independently selected from a hydrogen atom, a $C_1$ to $C_4$ alkyl, or a $C_1$ to $C_3$ alkyloxyacyl;
$R_{19}$ and $R_{20}$ each are independently selected from a hydrogen atom, a halogen atom, a $C_1$ to $C_6$ alkyl, a $C_1$ to $C_6$ haloalkyl, a $C_1$ to $C_6$ alkoxyl, a $C_1$ to $C_6$ haloalkoxyl, or an aryl; and optionally, $R_{19}$ and $R_{20}$ each are independently selected from a hydrogen atom, a halogen atom, or a $C_1$ to $C_6$ alkyl;
or
the sulfonate ester of Formula III is

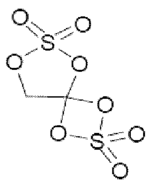, 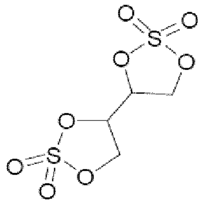, 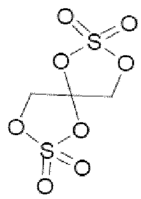,

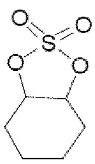, 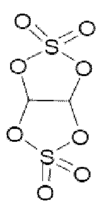, or 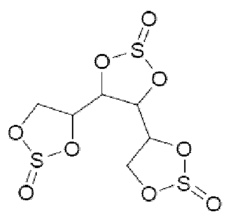.

**9.** The secondary battery according to claim 8, wherein the additive comprises at least one of the following substances:

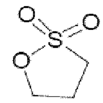
II-1
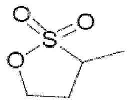
II-2
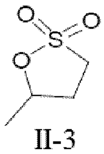
II-3
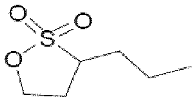
II-4
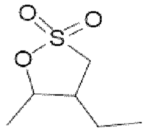
II-5

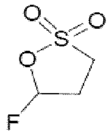
II-6
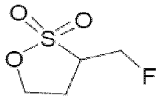
II-7
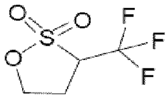
II-8
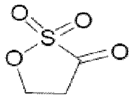
II-9
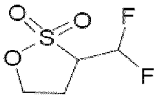
II-10

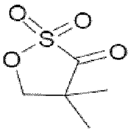
II-11
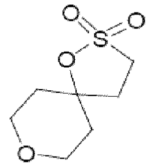
II-12
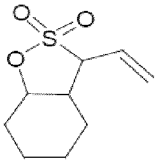
II-13
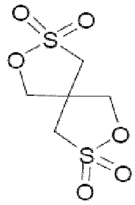
II-14
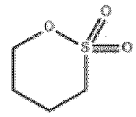
II-15

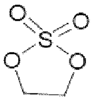
III-1
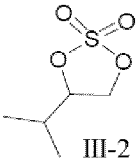
III-2
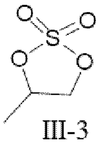
III-3
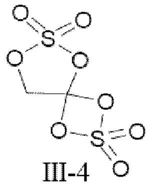
III-4
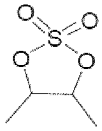
III-5

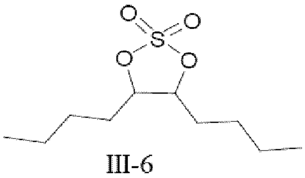
III-6
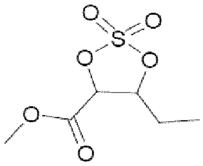
III-7
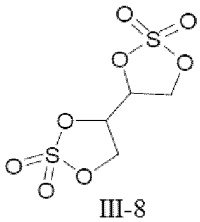
III-8
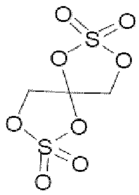
III-9

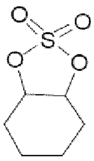
III-10
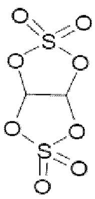
III-11
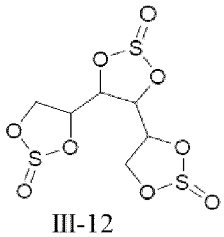
III-12
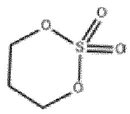
III-13
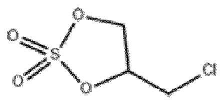
III-14
;

and
optionally, the additive comprises at least one of the following substances:

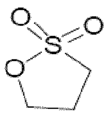
II-1
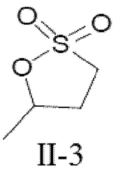
II-3
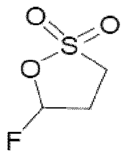
II-6
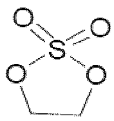
III-1

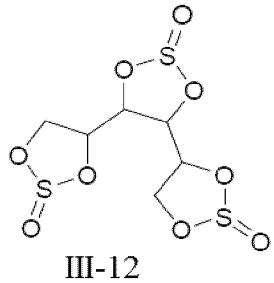

III-12

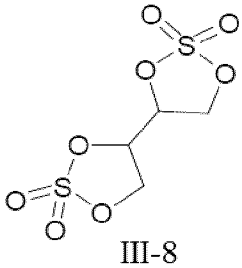

III-8

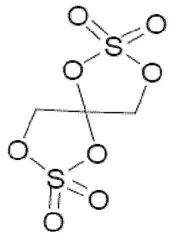

III-9

**10.** The secondary battery according to claim 8 or 9, wherein a content $W_3$ of the additive is 0.005 wt% to 10 wt%, optionally 0.01 wt% to 5 wt%, and further optionally 0.05 wt% to 2 wt%, based on a total mass of the electrolyte solution.

**11.** The secondary battery according to any one of claims 8 to 10, wherein a content $W_3$ of the additive and a content $W_1$ of the first lithium iron phosphate material satisfy the following relation:
$n = W_1/W_3$, and $2 < n < 8000$, optionally $3 \leq n \leq 6000$, further optionally $10 < n < 800$, and still further optionally $15 \leq n \leq 600$.

**12.** The secondary battery according to any one of claims 1 to 11, wherein the $D_{v50}$ of the second lithium iron phosphate material is 6 μm to 20 μm, and optionally 7 μm to 12 μm.

**13.** An electrical device, comprising the secondary battery according to any one of claims 9 to 12.

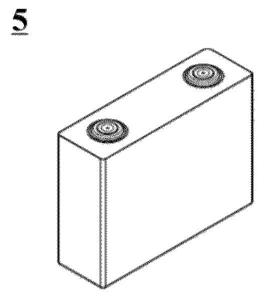


FIG. 1

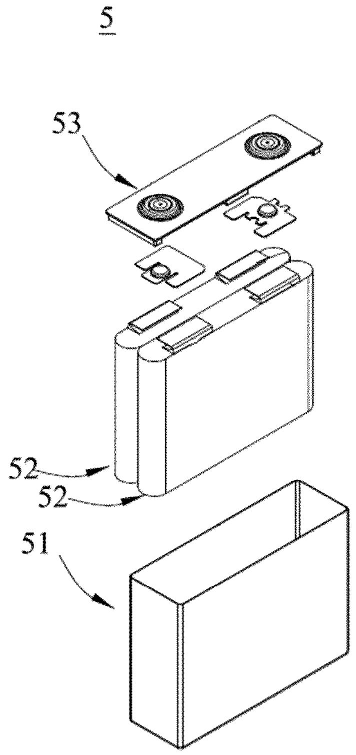


FIG. 2

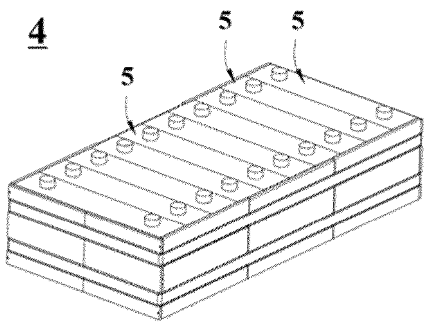


FIG. 3

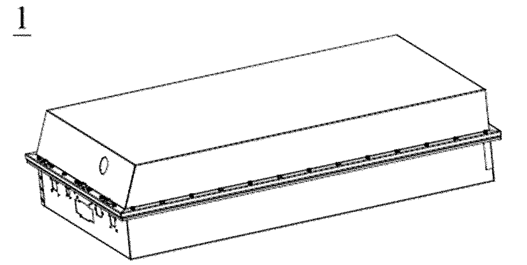


FIG. 4

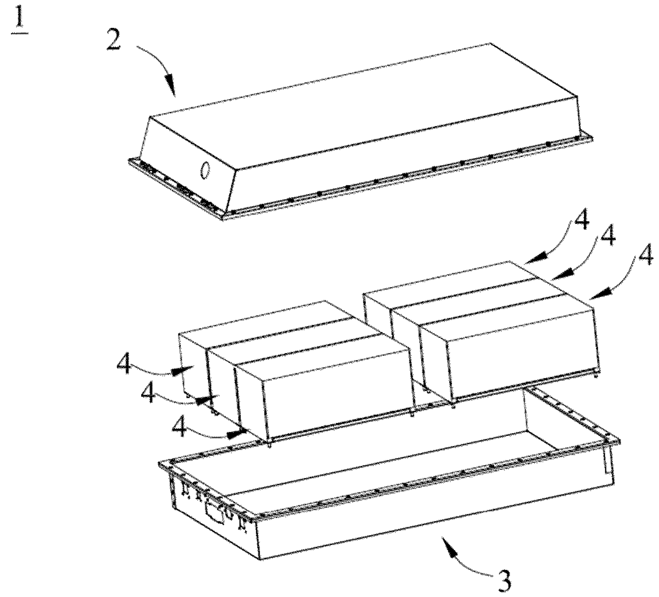


FIG. 5

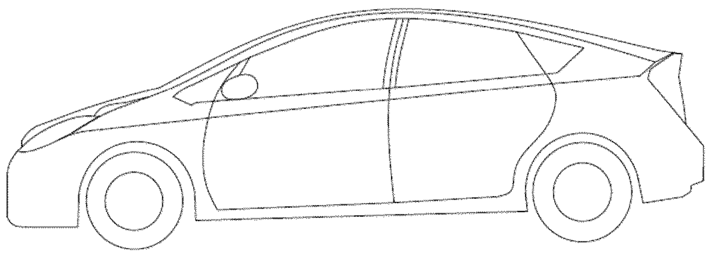

FIG. 6

## INTERNATIONAL SEARCH REPORT

International application No.
**PCT/CN2023/077904**

**A. CLASSIFICATION OF SUBJECT MATTER**

H01M10/0568(2010.01)i；H01M10/0569(2010.01)i；H01M10/0567(2010.01)i

According to International Patent Classification (IPC) or to both national classification and IPC

**B. FIELDS SEARCHED**

Minimum documentation searched (classification system followed by classification symbols)

IPC : H01M10/-.

Documentation searched other than minimum documentation to the extent that such documents are included in the fields searched

Electronic data base consulted during the international search (name of data base and, where practicable, search terms used)

CNTXT, ENTXTC, VEN, CNKI, Web of Science: 宁德时代, 锂电, 锂离子电池, 二次电池, 磷酸铁锂, 锂铁磷, LiFePO4, 正极, 直径, 粒径, 溶剂, 添加剂, 羧酸酯, , 磺酸内酯, 不同, 第二, 两种, lithium ion battery, cell, anode, dv50, LFP, lithium iron phosphate, additive, addition agent, grain diameter.

**C. DOCUMENTS CONSIDERED TO BE RELEVANT**

| Category* | Citation of document, with indication, where appropriate, of the relevant passages | Relevant to claim No. |
|---|---|---|
| X | KR 20140108875 A (LG CHEMICAL LTD.) 15 September 2014 (2014-09-15)<br>description, paragraphs 17-93, and figures 1-3 | 1-13 |
| A | CN 113036085 A (EVE ENERGY CO., LTD.; EVE INNOVATION ENERGY CO., LTD.) 25 June 2021 (2021-06-25)<br>entire document | 1-13 |
| A | WO 2022042373 A1 (SHENZHEN CAPCHEM TECHNOLOGY CO., LTD.) 03 March 2022 (2022-03-03)<br>entire document | 1-13 |
| A | CN 115699388 A (NINGDE CONTEMPORARY AMPEREX TECHNOLOGY CO., LTD.) 03 February 2023 (2023-02-03)<br>entire document | 1-13 |
| A | WO 2022047705 A1 (CONTEMPORARY AMPEREX TECHNOLOGY CO., LTD.) 10 March 2022 (2022-03-10)<br>entire document | 1-13 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **23 October 2023** | **26 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2023/077904**

**C. DOCUMENTS CONSIDERED TO BE RELEVANT**

| Category* | Citation of document, with indication, where appropriate, of the relevant passages | Relevant to claim No. |
|---|---|---|
| A | US 2023016240 A1 (CONTEMPORARY AMPEREX TECHNOLOGY CO., LTD.) 19 January 2023 (2023-01-19)<br>entire document | 1-13 |
| A | CN 114730910 A (NINGDE CONTEMPORARY AMPEREX TECHNOLOGY CO., LTD.) 08 July 2022 (2022-07-08)<br>entire document | 1-13 |

Form PCT/ISA/210 (second sheet) (July 2022)

**INTERNATIONAL SEARCH REPORT**
**Information on patent family members**

International application No.
**PCT/CN2023/077904**

| Patent document cited in search report | Publication date (day/month/year) | Patent family member(s) | Publication date (day/month/year) |
|---|---|---|---|
| KR 20140108875 A | 15 September 2014 | KR 101588615 B1 | 26 January 2016 |
| CN 113036085 A | 25 June 2021 | None | |
| WO 2022042373 A1 | 03 March 2022 | WO 2022042373 A8 | 21 April 2022 |
| | | CN 114122491 A | 01 March 2022 |
| CN 115699388 A | 03 February 2023 | WO 2022246798 A1 | 01 December 2022 |
| | | US 2022407115 A1 | 22 December 2022 |
| | | EP 4120418 A1 | 18 January 2023 |
| | | EP 4120418 A4 | 05 April 2023 |
| | | JP 2023525428 W | 16 June 2023 |
| WO 2022047705 A1 | 10 March 2022 | US 2023108289 A1 | 06 April 2023 |
| | | EP 4170755 A1 | 26 April 2023 |
| | | EP 4170755 A4 | 16 August 2023 |
| | | CN 116097468 A | 09 May 2023 |
| US 2023016240 A1 | 19 January 2023 | EP 4075538 A1 | 19 October 2022 |
| | | EP 4075538 A4 | 25 January 2023 |
| | | WO 2022041259 A1 | 03 March 2022 |
| | | CN 114982002 A | 30 August 2022 |
| | | US 2023016240 A1 | 19 January 2022 |
| CN 114730910 A | 08 July 2022 | CN 114730910 B | 29 August 2023 |
| | | WO 2022032624 A1 | 17 February 2022 |
| | | EP 4120408 A1 | 18 January 2023 |
| | | US 2023075325 A1 | 09 March 2023 |
| | | EP 4120408 A4 | 07 June 2023 |

Form PCT/ISA/210 (patent family annex) (July 2022)